# EUROPÄISCHE PATENTSCHRIFT

(11) **EP 4 169 785 B1**
(45) Veröffentlichungstag und Bekanntmachung des Hinweises auf die Patenterteilung: **14.08.2024**
(21) Anmeldenummer: 22197085.8
(22) Anmeldetag: 22.09.2022
(51) Int. Cl.: B60W 30/02, B60W 30/18, B60W 10/184, B60W 10/20, B60W 10/04

(54) **VERFAHREN ZUM SICHEREN BEENDEN EINER BANKETTFAHRT EINES KRAFTFAHRZEUGS**
METHOD FOR SECURELY TERMINATING THE REMOTING OF A MOTOR VEHICLE
PROCÉDÉ DE TERMINAISON SÉCURISÉE D'UN PARC DE STATIONNEMENT D'UN VÉHICULE AUTOMOBILE

(30) Priorität: 25.10.2021 DE 102021212019
(43) Veröffentlichungstag der Anmeldung: 26.04.2023
(73) Patentinhaber: VOLKSWAGEN AG, 38440 Wolfsburg (DE)
(72) Erfinder: Bartels, Arne, 38448 Wolfsburg (DE); Kolms, Thomas, 38553 Wasbüttel (DE); Klingemann, Timo, 38524 Sassenburg (DE); Bräutigam, Robin, 50226 Frechen (DE); Sakpal, Amogh, 50321 Brühl (DE)

(56) Entgegenhaltungen:
- DE-A1- 102005 003 177
- DE-A1- 102019 111 255
- DE-A1- 102019 206 882
- US-A1- 2018 170 377
- US-A1- 2019 263 391

## Beschreibung

Die vorliegende Erfindung betrifft ein Verfahren zum sicheren Beenden einer Bankettfahrt eines Kraftfahrzeugs, ein entsprechendes Unterstützungssystem und ein Computerprogramm.

Bei einer Bankettfahrt eines Kraftfahrzeugs, also einer Situation, bei der sich wenigstens ein Rad des Kraftfahrzeugs in einem Bankett neben einer Fahrbahn befindet und sich wenigstens ein gegenüberliegendes Rad auf der Fahrbahn befindet, liegt eine sogenannte µ-Split-Situation vor. Dabei steht µ für den Reibwert zwischen den jeweiligen Rädern und dem entsprechenden Untergrund. Beispielsweise befinden sich die linken Räder des Kraftfahrzeugs auf der Fahrbahn mit hohem Reibwert, beispielsweise Beton oder Asphalt, wohingegen sich die rechten Räder des Kraftfahrzeugs im Bankett mit niedrigem Reibwert befinden, beispielsweise Gras, Schotter oder Sand. Wenn der Fahrer des Kraftfahrzeugs diese Situation erkennt und versucht, das Fahrzeug zurück auf die Fahrbahn zu lenken, kann es vorkommen, dass der Fahrer übermäßige Lenk-, Brems- oder Beschleunigungsmanöver durchführt und in der Konsequenz die Kontrolle über das Kraftfahrzeug verliert oder weiter als beabsichtigt in Richtung der gegenüberliegenden Fahrbahnseite gerät. Dadurch können schwere Unfälle entstehen.

Die WO 2005/192765 A1 beschreibt ein Assistenzsystem für Kraftfahrzeuge, insbesondere einen elektronischen Rally-Copilot, einen Überholassistent oder einen Rechts-vor-Links Assistent. Das Assistenzsystem umfasst wenigstens eine Steuereinheit, welche bei einer durch die Steuereinheit erkannter Vorgabe des Fahrzeugführers aus drei Gruppen sogenannter globaler, lokaler und interner Daten je wenigstens eine Datenangabe auswählt und diese dergestalt miteinander verknüpft, dass hiervon abhängig ein auf die Fahrdynamik des Kraftfahrzeuges bezogenes Ausgangssignal erzeugt wird ist.

In der DE 199 36 786 A1 sind bei einem ESP-Regler für Kraftfahrzeuge, der als Basisfunktionen mindestens einen Fahrzeugdynamikregler (GMR - Giermomentregelung) und ein Antiblockiersystem (ABS oder ABSplus) enthält und weitere Basisfunktionen oder Systeme, wie ASR (Anti-Schlipf-Regelung), MSR (Motor-Schleppmoment-Regelung), EBV (Elektronische Bremskraft-Verteilung), aufweisen kann, die Basisfunktionen hierarchisch organisiert, wobei der Fahrzeugdynamikregler (GMR-Regler) den übrigen Systemen übergeordnet ist. Dabei errechnet der Fahrzeugdynamikregler (GMR-Regler) auf Basis der Giergeschwindigkeitsabweichung von der für die aktuelle Fahrsituation vordefinierten Soll-Gierwinkelgeschwindigkeit und der Abweichung des geschätzten Fahrzeugschwimmwinkels ein zusätzliches Giermoment (ΔM) und zusätzliche resultierende Längs- und Seitenkräfte (ΔF_{L}, ΔF_{S}). Diese Größen (ΔM, ΔF_{quer}, ΔF_{längs}) werden dann als Korrekturwerte für die von den untergeordneten Systemen oder Basisfunktionen erzeugten Giermomente, Seiten- und Längskräfte ausgewertet.

Die DE 10 2004 017 845 A1 beschreibt ein Verfahren zum Ermitteln des Giermoments eines vierrädrigen Kraftfahrzeugs mit einem Fahrzeugreferenzmodell, welches die Abweichung (ΔΨ) einer gemessenen Gierrate (Ψᵢₛₜ) von einer in Abhängigkeit von einem vom Fahrer eingestellten Lenkwinkel berechneten Referenzgierrate (Ψ_{ref}) ermittelt. Das Verfahren ist gekennzeichnet durch die Schritte: Erkennen einer Fahrsituation auf einer Fahrbahn mit seitenweise unterschiedlichen Reibwerten (µ-Split), Ermitteln der durch die Fahrsituation erforderlichen Lenkwinkelkorrekturen und Korrigieren von Größen des Fahrzeugmodells nach Maßgabe der Lenkwinkelkorrekturen.

In der DE 10 2019 206 875 A1 wird ein Verfahren zur zuverlässigen Detektion einer Bankettfahrt angegeben, wobei wenigstens eine Messgröße mittels wenigstens einer Sensoreinheit eines Kraftfahrzeugs erfasst wird. Basierend auf der wenigstens einen Messgröße werden mittels einer Recheneinheit ein erster Kontrollwert, welcher eine Radbewegung eines Rads betrifft, sowie ein zweiter Kontrollwert, welcher eine Fahrzeugzustandsgröße des Kraftfahrzeugs betrifft, bestimmt. Basierend auf einem Vergleich des ersten Kontrollwerts mit einem ersten Grenzwert und auf einem Vergleich des zweiten Kontrollwerts mit einem zweiten Grenzwert werden jeweils ein erster und ein zweiter Konfidenzwert für das Vorliegen der Bankettfahrt bestimmt. Basierend auf dem ersten und dem zweiten Konfidenzwert wird ein Gesamtkonfidenzwert bestimmt.

In der DE 10 2019 206 883 A1 wird zum Beenden einer Bankettfahrt eines Kraftfahrzeugs mittels einer Detektionseinheit erkannt, dass sich das Kraftfahrzeug wenigstens teilweise in einem Bankett befindet. Eine Lenkintensität eines manuellen Lenkmanövers wird bestimmt und dem Lenkmanöver wird abhängig von der Lenkintensität mittels einer Recheneinheit eine von wenigstens zwei vorgegebenen Lenkkennzahlen zugeordnet. Abhängig von der zugeordneten Lenkkennzahl wird ein automatischer Eingriff in eine Fahrzeugsteuerung vorgenommen.

In der DE 10 2019 206 882 A1 ist ein Verfahren zum Beenden einer Bankettfahrt beschrieben, bei dem mittels einer Detektionseinheit eines Kraftfahrzeugs erkannt wird, dass sich ein Rad in einem Bankett befindet. Mittels einer Sensoreinheit wird eine Fahrerreaktion erfasst und mittels einer Recheneinheit die Fahrerreaktion einer von wenigstens zwei Intensitätsklassen zugeordnet. Mittels einer Steuereinheit wird ein der Fahrerreaktion entgegengesetzter Eingriff in die Fahrzeugsteuerung vorgenommen, wenn die Fahrerreaktion einer ersten Intensitätsklasse zugeordnet wurde und ein die Fahrerreaktion unterstützender Eingriff, wenn die Fahrerreaktion einer zweiten Intensitätsklasse zugeordnet wurde.

Während elektronische Stabilitätsprogramme oder ähnliche Assistenten eine Person beim Führen eines Fahrzeugs auf der Fahrbahn unterstützen und beispielsweise auf Abweichungen einer Istgierrate von einer Sollgierrate reagieren, die beispielsweise auch auftreten können, weil an den unterschiedlichen Fahrzeugrädern unterschiedliche Reibwerte des Untergrunds existieren, erfolgt bei einem Verfahren zum Unterstützen des Beendens einer Bankettfahrt keine Regelung wie bei den bekannten Assistenzsystemen, sondern eine Vorsteuerung. Bereits im Vorfeld eines erwarteten auftretenden Giermoments aufgrund eines Reibwertsprungs und hiermit verbundener hoher Querbeschleunigungssprünge an den Rädern des Fahrzeugs, die von dem Bankett auf die Fahrbahn zurückkehren, wird von einer Bankettfunktion, wie sie beispielsweise in der DE 10 2019 206 882 A1 beschrieben ist, ein die Fahrdynamik beeinflussender Eingriff vor einer Rückkehr der Räder auf die Fahrbahn aktiv eingeleitet. Das bei einem Übergang der Räder vom Bankett auf die Fahrbahn aufgrund eines hiermit verbundenen Reibwertsprungs und den daraus resultierenden Sprüngen in den Querkräften der Räder resultierendes Giermoment, welches ein Übersteuern des Fahrzeugs bewirkt, wird hier als Übergangsgiermoment bezeichnet. Eine Bankettfunktion oder ein Verfahren zum Unterstützen eines Beendens einer Bankettfahrt, versucht diesen Übergangsgiermoment durch einen Vorsteuernden Eingriff vor dessen Auftreten zu kompensieren.

Es hat sich jedoch gezeigt, dass die aus dem Stand der Technik bekannten Verfahren noch weiter verbessert werden können, um die Sicherheit beim Beenden der Bankettfahrt weiter zu steigern.

Die Erfindung wird durch ein Verfahren mit den Merkmalen des Patentanspruchs 1, ein Unterstützungssystem mit den Merkmalen des Patentanspruchs 10 sowie ein Computerprogramm mit den Merkmalen des Patentanspruchs 11 gelöst. Vorteilhafte Ausgestaltungen der Erfindung ergeben sich aus den Unteransprüchen.

Die Erfindung bildet insbesondere den Stand der Technik aus der DE 10 2019 206 882 A1 weiter, die beim Erkennen einer Bankettfahrt und Erfassen einer Fahrerreaktion, die ein Zurückführen des Kraftfahrzeugs auf die Fahrbahn beabsichtigt, ein Solleingriffssignal erzeugt, um vor der Rückkehr der Räder aus dem Bankett auf die Fahrbahn die Fahrdynamik so zu beeinflussen, dass dieser Übergang möglichst so von statten geht, dass kein Übersteuern des Fahrzeugs eintritt und die Gefahr minimiert wird, dass das Fahrzeug nicht nur auf die Fahrbahn zurückgeführt, sondern auf eine daneben befindliche, gegebenenfalls für den entgegenkommenden Verkehr vorgesehene Fahrspur bewegt wird. Wie im Stand der Technik bereits beschrieben, findet in der Regel eine Überreaktion einer das Fahrzeug führenden Person statt, wenn diese die Bankettfahrt bemerkt. Aus diesem Grund wird die Solleingriffsvorgabe in der Regel so erzeugt, dass diese der Überreaktion entgegenwirkt. Nur in Ausnahmefällen ist die Fahrerreaktion so, dass diese zwar eine Absicht zur Rückführung des Fahrzeugs auf die Fahrbahn erkennen lässt, jedoch hinsichtlich der Eingriffsstärke zu gering ist, um diese angemessen zu erreichen. In einem solchen Fall kann die Solleingriffsvorgabe auch unterstützend in Richtung auf die Zurückführung auf die Fahrbahn wirken. Ausgehend von der erfassten Reaktion des Fahrers wird gemäß dem Stand der Technik der Eingriff in die Fahrzeugsteuerung vorgenommen. Hier wird davon ausgegangen, dass eine Solleingriffsvorgabe die Stärke des Eingriffs im Vorfeld der Rückführung auf die Fahrbahn festlegt. Wie unten erläutert wird, können unterschiedliche Faktoren bei einer Festlegung einer ursprünglichen oder anfänglich angeforderten Solleingriffsvorgabe berücksichtigt werden. Da die Situation jedoch von den verschiedensten Faktoren abhängig ist und sich auch zeitkontinuierlich verändert, ist erfindungsgemäß vorgesehen, dass zeitlich vor dem Erfassen eines Beendens der Bankettfahrt mindestens ein Sensorsignal ausgewertet wird, anhand des mindestens einen Sensorsignals geprüft wird, ob die Solleingriffsvorgabe noch angemessen ist und die Solleingriffsvorgabe angepasst wird, falls diese aufgrund der Auswertung des mindestens einen Sensorsignals nicht mehr angemessen erkannt ist. Vorteil der Erfindung ist es, dass zwar zeitnah und schnell auf das beabsichtigte Beenden der Bankettfahrt reagiert wird, jedoch die Vorsteuerung der Solleingriffsvorgabe noch vor dem Moment überprüft und gegebenenfalls angepasst wird, an dem das durch die Solleingriffsvorgabe möglichst vorkompensierte Übergangsgiermoment auftritt, nämlich zum Zeitpunkt des Übergangs der Räder von dem Bankett auf die Fahrbahn. Hierdurch können Veränderungen in der Fahrsituation und dem Fahrerverhalten adäquat berücksichtigt werden, um eine sichere Rückführung des Fahrzeugs auf die Fahrbahn zu gewährleisten. Die Bankettfahrt ist in dem hier beschriebenen Zusammenhang der Fahrzustand, bei dem sich mindestens ein Rad des Fahrzeugs nicht auf der Fahrbahn, sondern im Bankett befindet. Die Bankettfahrt endet, wenn sich wieder alle Räder auf der Fahrbahn befinden.

Bei einer bevorzugten Ausführungsform der Erfindung ist vorgesehen, dass die Solleingriffsvorgabe ein Zusatzgiermoment angibt. Ein Vorteil eines so ausgestalteten Verfahrens ist es, dass unterschiedliche Fahrzeugsysteme eine Umsetzung der Solleingriffsvorgabe bewerkstelligen können. So können beispielsweise bei Fahrzeugen, die eine Steer-by-Wire-Technik besitzen, hierdurch aktive Lenkeingriffe ausgelöst werden, bei anderen Fahrzeugen wird zusätzlich oder alternativ eine gezielte Bremsung einzelner Räder ausgeführt. Als besonders vorteilhaft hat es sich erwiesen, falls die Lenkbewegung des Fahrers zu heftig zurück auf die Fahrbahn ausfällt, das vordere im Bankett befindliche Rad vor der Rückkehr auf die Fahrbahn, welche in der Regel einen höheren Reibwert aufweist, abzubremsen, um die auftretenden Querkräfte zu reduzieren.

Bei einer bevorzugten Ausführungsform wird als eines des mindestens einen Sensorsignals eine Istgierrate erfasst und zusätzlich eine Sollgierrate aufgrund der Lenkreaktion des Fahrers ermittelt oder erfasst und eine Differenz der Istgierrate und der Sollgierrate bestimmt und die Solleingriffsvorgabe angepasst, wenn ein Betrag der Differenz einen ersten Gierratenschwellenwert überschreitet oder der Betrag der Differenz einen zweiten Gierratenschwellenwert nicht überschreitet, wobei der zweite Gierratenschwellenwert kleiner als der erste Gierratenschwellenwert ist.

Nach dem Erkennen des Fahrerwunsches, die Bankettfahrt zu beenden, wird die Eingriffsstärke für die Solleingriffsvorgabe festgelegt. Wie bereits erwähnt und im Stand der Technik beschrieben, wird hierbei in der Regel eine Lenkbewegung seitens einer das Fahrzeug führenden Person ausgeführt, die eine Sollgierrate festlegt, welche für eine Rückführung nicht sinnvoll ist, nämlich in der Regel zu hoch ist. Da jedoch das Fahrzeug bei der Bankettfahrt aufgrund des geringeren Reibwerts der im Bankett fahrenden Räder sich gemäß der Erwartung zunächst untersteuernd verhält, da die Räder nur eine geringe Seitenkraft aufbauen können, weichen Istgierrate und Sollgierrate erwartungsgemäß voneinander ab. Demnach wird zunächst eine geringe Istgierrate erwartet, die anschließend ansteigt und einen Sprung ausführt, wenn die Räder des Fahrzeugs vom Bankett auf die Fahrbahn zurückgelangen. Da durch die Solleingriffsvorgabe ein Untersteuern des Fahrzeugverhaltens angestrebt ist, ist somit eine Abweichung zwischen Sollgierrate und Istgierrate als positiv zu bewerten. Bei sehr großen Gierratenabweichungen kann jedoch das durch die Solleingriffsvorgabe verursachte Zusatzgiermoment, welches der Rückführung auf die Fahrbahn entgegenwirkt, reduziert werden. Dieses tritt somit ein, wenn der Betrag der Differenz den ersten Girratenschwellenwert überschreitet. Tritt jedoch eine geringe Abweichung zwischen Sollgierrate und Istgierrate auf, so bedeutet dies, dass das Fahrzeug der unangemessenen Lenkreaktion der fahrenden Person folgt. In einem solchen Fall ist es somit sinnvoll, eine Solleingriffsvorgabe, die der Rückführung des Fahrzeugs auf die Fahrbahn entgegenwirkt, zu steigern, um das Fahrzeug bzw. die unangemessene Lenkreaktion stärker zu bedämpfen. Ist somit ein Betrag der Differenz zwischen Istgierrate und Sollgierrate geringer als der zweite Schwellenwert, so wird die Soll-Eingriffsvorgabe so angepasst, dass das von der Fahrbahn wegwirkende Zusatzgiermoment erhöht wird.

Diese Anpassung der Solleingriffsvorgabe abhängig von der Abweichung der Istgierrate von der Sollgierrate, die durch die Lenkreaktion des Fahrers festgelegt ist, findet nur solange statt, wie eine Bankettfahrt stattfindet. Beim Übergang des Fahrzeugs auf die Fahrbahn wird die Solleingriffsvorgabe konstant gehalten, um ein möglichst stetiges Fahrverhalten für den Fahrzeugführer zu erreichen und dieses vorhersehbar zu gestalten. Dieses gilt für alle Anpassungen der Solleingriffsvorgabe. Während des Übergangs der Räder vom Bankett auf die Fahrbahn wird die Solleingriffsvorgabe vorteilhafterweise konstant gehalten.

Bis der Übergang einsetzt, kann eine Anpassung vorzugswese iterativ erfolgen. Eine Ausführungsform der Erfindung sieht daher vor, dass zumindest eines des mindestens einen Sensorsignals iterativ erfasst wird und ein Anpassen der Solleingriffsvorgabe aufgrund einer Änderung des zumindest einen iterativ erfassten des mindestens einen Sensorsignals erfolgt. Somit kann eine Anpassung auf die veränderte Situation jeweils aktuell erfolgen.

Alternativ oder zusätzlich können andere Größen als die Gierrate des Fahrzeugs ausgewertet und überwacht werden.

Es hat sich gezeigt, dass mit der Fahrzeuggeschwindigkeit auch das Übergangsgiermoment, welches bei einem Wechsel der Räder vom Bankett auf die Straße induziert wird, steigt. Daher muss die Solleingriffsvorgabe, die diesem Übergangsgiermoment entgegenwirkt, d.h. das Zusatzgiermoment, vorzugsweise abhängig von der Geschwindigkeit angefordert werden.

Da eine Unfallschwere mit der kinetischen Energie des Fahrzeugs zusammenhängt und diese quadratisch von der Fahrzeuggeschwindigkeit abhängig ist, hat es sich grundsätzlich als sinnvoll erwiesen, bei einer Bankettfahrt, zumindest ab dem Zeitpunkt, ab dem ein Fahrereingriff erfasst ist, der eine Rückführung des Fahrzeugs auf die Fahrbahn anstrebt, die Geschwindigkeit des Fahrzeugs zu reduzieren, indem alle Fahrzeugräder, angepasst an die entsprechenden Reibwerte, zur Reduktion der Fahrzeuggeschwindigkeit gebremst werden.

Eine weitere Reduktion der Geschwindigkeit des Fahrzeugs kann auch über ein Begrenzen oder Reduzieren des Antriebmoments herbeigeführt werden. Für eine sichere Rückführung ist es somit vorteilhaft, wenn während einer Bankettfahrt keine Beschleunigung des Fahrzeugs möglich ist. Bei einer bevorzugten Ausführungsform ist daher vorgesehen, dass ein Motormoment oder Antriebsmoment während der Bankettfahrt begrenzt oder reduziert wird, sofern nicht ein Kollisionssignal eine erkannte Kollisionsgefahr anzeigt. Auch für den Fall, dass festgestellt wird, dass der Fahrer gezielt das Bankett befährt, beispielsweise mit geringer und angepasster Geschwindigkeit um einem Hindernis zu umfahren, kann eine Begrenzung des Antriebsmoments und gegebenenfalls auch ein reduzieren der Fahrzeuggeschwindigkeit vorzugsweise unterbleiben. Ein beabsichtigtes Befahren kann beispielsweise am gezielten aber angemessenen Lenkverhalten, einer erfassten Blickrichtung der das Fahrzeug führenden Person usw. abgeleitet werden.

Wird jedoch eine Solleingriffsvorgabe ausgegeben, um ein übermäßiges Lenkverhalten der das Fahrzeug führenden Person und/oder das erwartete Übergangsgiermoment zu bedämpfen, so ist diese vorzugsweise abhängig von der Fahrzeuggeschwindigkeit anzupassen. Ein Eingriff in die Fahrdynamik gemäß der Solleingriffsvorgabe, beispielsweise das Erzeugen des Zusatzgiermoment wird vorzugsweise durch radselektive Bremseingriffe an den im Bankett fahrenden Rädern erzeugt wird. Nimmt die Fahrzeuggeschwindigkeit zu, so sind die Bremseingriffskräfte zu erhöhen, um das Übergangsgiermoment vor zu kompensieren. Nimmt die Geschwindigkeit des Fahrzeugs hingegen ab, so kann das durch die radselektiven Bremseingriffe herbeigeführte Zusatzgiermoment reduziert werden, d.h. die Solleingriffsvorgabe reduziert werden. Diese radselektiven Bremseingriffe sind den gegebenenfalls vorgenommenen Bremseingriffen zur Reduktion der Geschwindigkeit, die an allen Rädern vorgenommen wird überlagert. Zum vorsteuernden Bedämpfen des Übergangsgiermoments wird beispielsweise ein vorderes im Bankett fahrendes Rad stärker gebremst als dieses zur Fahrzeuggeschwindigkeitsreduktion vorgesehen ist.

Bei einer Ausführungsform ist somit vorgesehen, als eines des mindestens einen Sensorsignals eine Fahrzeuggeschwindigkeit iterativ zu erfassen und eine Änderung der Fahrzeuggeschwindigkeit auszuwerten und beim Feststellen einer Zunahme der Fahrzeuggeschwindigkeit das zum Bankett weisende Zusatzgiermoment zu erhöhen und das zur Fahrbahn weisende Zusatzgiermoment zu erniedrigen und beim Feststellen einer Geschwindigkeitsabnahme der Fahrzeuggeschwindigkeit das zum Bankett weisende Zusatzgiermoment zu erniedrigen und das zur Fahrbahn weisende Zusatzgiermoment zu erhöhen.

Die ursprüngliche Solleingriffsvorgabe wird ermittelt, wenn erkannt worden ist, dass der Fahrer das Fahrzeug vom Bankett zurück auf die Straße lenken will. Zunächst erfolgt eine Solleingriffsvorgabe beispielsweise gemäß einem Vorgabewert. Dieser kann wie oben erwähnt abhängig von der aktuellen Fahrzeuggeschwindigkeit oder anderen Parametern sein. Wie stark das durch die Solleingriffsvorgabe bestimmte Zusatzgiermoment sein muss, hängt jedoch entscheidend von dem Lenkverhalten des Fahrzeugführers ab. Daher ist es sinnvoll, die Solleingriffsvorgabe an das Lenkverhalten anzupassen. In der Regel findet eine initiale Überreaktion der fahrenden Person statt. Am schnellsten reagiert die Lenkradwinkelgeschwindigkeit, die dem eigentlichen Lenkradwinkel vorauseilt. Ist somit eine Lenkradwinkelgeschwindigkeit hoch, so ist davon auszugehen, dass das Soll-Giermoment, welches durch das Lenkverhalten des Fahrers bestimmt wird, unangemessen hoch für eine Rückführung des Fahrzeugs wird. Daher ist es sinnvoll, die Solleingriffsvorgabe, die ein Zusatzgiermoment bestimmt, welches dem Sollgiermoment der fahrenden Person entgegengerichtet ist, zu erhöhen, wenn die Lenkradwinkelgeschwindigkeit steigt oder hoch ist, und zu erniedrigen, wenn die Lenkradgeschwindigkeit gering ist oder gesenkt wird. Hierbei ist davon auszugehen, dass die Lenkradwinkelgeschwindigkeit in einem Bereich liegt, der überhaupt einen Eingriff zum Unterstützen der Rückführung vom Bankett auf die Fahrbahn bewirkt.

Bei einer Ausführungsform ist daher vorgesehen, dass die Lenkradwinkelgeschwindigkeit als eines des mindestens einen Sensorsignals iterativ erfasst wird und eine Änderung der Lenkradgeschwindigkeit ausgewertet wird und beim Feststellen einer Zunahme der Lenkradwinkelgeschwindigkeit oder einer Lenkradwinkelgeschwindigkeit oberhalb eines Lenkradwinkelgeschwindigkeitsschwellenwerts das zum Bankett weisende Zusatzgiermoment erhöht und das zur Fahrbahn weisende Zusatzgiermoment erniedrigt wird und beim Feststellen einer Abnahme der Lenkradwinkelgeschwindigkeit oder einer Lenkradwinkelgeschwindigkeit unterhalb eines zweiten Lenkradwinkelgeschwindigkeitsschwellenwerts das zum Bankett weisende Zusatzgiermoment erniedrigt und das zur Fahrbahn weisende Zusatzgiermoment erhöht wird.

Die Lenkradwinkelgeschwindigkeit ist insbesondere am Beginn der eingeleiteten Rückführung des Fahrzeugs auf die Fahrbahn von hoher Bedeutung. Im weiteren Verlauf kann auch der eigentliche Lenkradwinkel alternativ oder zusätzlich ausgewertet werden.

Bei einer weiteren Ausführungsform wird als eines des mindestens einen Sensorsignals eine Querbeschleunigung erfasst und die Querbeschleunigung mit einem Querbeschleunigungsschwellenwert verglichen, welcher geringer als eine Eingriffsschwelle eines Stabilisierungsassistenten, z.B. eines ESP, für eine normale Fahrt auf einer Fahrbahn ist und bei Überschreiten des Querbeschleunigungsschwellenwertes die Solleingriffsstärke auf Null zurückgeführt wird. Es hat sich gezeigt, dass Situationen auftreten können, in denen eine Fahrerreaktion, die ein Zurückführen des Fahrzeugs auf die Fahrbahn bezweckt, in einem fahrdynamischen Grenzbereich stattfindet, bei dem Zusatzgiermomente einer Bankettfunktion oder eines Assistenzsystems zum Unterstützen des Beendens einer Bankettfahrt zu einer Destabilisierung des Fahrzeugs führen können. In einer solchen Situation ist es sinnvoll, gar kein Zusatzgiermoment anzufordern bzw. das bereits angeforderte Zusatzgiermoment auf Null zurückzuführen. Solche Situationen können beispielsweise auftreten, wenn das Fahrzeug aufgrund eines Untersteuerns bei einer Kurvenfahrt am kurvenäußeren Rand in das Bankett gerät oder aufgrund eines Übersteuerns in das kurveninnere Bankett der Fahrbahn gelangt. In solchen Situationen kommt es dann, wenn die Grenzen der Fahrstabilität erreicht sind, zu einem Stabilisierungseingriff einer Fahrdynamikregelung, beispielsweise eines elektronischen Stabilitätsprogramms, wie bei einer normalen Fahrt auf der Fahrbahn, wenn unerwartete Giermomente auftreten. Die Fahrzeugstabilisierung wird in diesem Fall dem elektronischen Stabilitätsprogramm und dem zugehörigen Assistenten überlassen. Ebenfalls auf Null wird die Solleingriffsvorgabe bzw. das Zusatzgiermoment geführt, wenn erkannt wird, dass die vom Fahrer initiierte Lenkbewegung nicht oder nicht allein dem Zurückführen des Fahrzeugs auf die Fahrbahn dient, sondern beispielsweise dem Ausweichen eines Hindernisses und einer Kollisionsvermeidung dient. In einem solchen Fall ist ein Abdämpfen der angeforderten Gierrate unerwünscht und wird daher unterlassen. Wird somit beispielsweise eine Warnung eines Kollisionsvermeidungssystems erfasst, so wird eine Anpassung der Solleingriffsvorgabe vorgenommen, um das angeforderte Zusatzgiermoment auf Null zurückzuführen. Liegt ein Kollisionswarnhinweis bereits beim Erfassen der Absicht der das Fahrzeug fahrenden Person zum Zurückführen des Fahrzeugs auf die Fahrbahn vor, so wird keine Solleingriffsvorgabe oder eine Solleingriffsvorgabe mit dem Wert Null ausgegeben.

Um ein möglichst stetiges Fahrverhalten zu erreichen, welches eine fahrende Person möglichst wenig irritiert, ist es wünschenswert, die Solleingriffsvorgabe während des Übergangs der Räder von dem Bankett auf die Fahrbahn konstant zu halten. Aus denselben Gründen sollte nach der Rückkehr des Fahrzeugs auf die Fahrbahn keine abrupte Änderung des Zusatzgiermoments bzw. der Solleingriffsvorgabe herbeigeführt werden. Um den Fahrer nicht nachteilig zu beeinflussen, muss jedoch das Zusatzgiermoment möglichst schnell wieder auf Null zurückgeführt werden. Der Abbau erfolgt vorzugsweise so, dass die fahrende Person möglichst ein stetiges Fahrverhalten erfährt, um in dieser besonderen Fahrsituation möglichst wenig gestört oder irritiert zu werden. Es ist daher vorgesehen, das angeforderte Zusatzgiermoment in Abhängigkeit von dem Lenkeingriff der fahrenden Person zu reduzieren.

Während die fahrende Person zunächst zum Verlassen des Banketts in Richtung auf die Fahrbahn lenkt, wird hierdurch ein Lenkwinkel aufgebaut. Wenn das Fahrzeug das Bankett verlässt, droht das Fahrzeug, nun den eigenen Fahrstreifen zu verlassen und in einen benachbarten Fahrstreifen oder den Fahrstreifen des Gegenverkehrs zu geraten. Die fahrende Person wird daher ein Gegenlenken einleiten, um den Gierwinkel des Fahrzeugs wieder zu reduzieren und das Fahrzeug parallel zum eigenen Fahrstreifen auszurichten. Der Lenkradwinkel, welcher zum Verlassen des Banketts aufgebaut wurde, wird durch die fahrende Person somit wieder abgebaut. Bei einer bevorzugten Ausführungsform ist vorgesehen, dass nach dem Erfassen des Endes einer Bankettfahrt die Solleingriffsstärke proportional zur Reduktion des Lenkradwinkels reduziert wird, sodass die Solleingriffsvorgabe bzw. das Zusatzgiermoment bei einem Lenkwinkel, der einer Geradeausfahrt entspricht, abgebaut ist. Lenkt die fahrende Person über eine Geradeausstellung des Lenkrads hinaus, wird kein weiteres Giermoment angefordert. Der Abbau des Giermoments entspricht somit dem Wunsch der fahrenden Person und es tritt kein abrupter Abbau des Giermoments auf.

Auch in Situationen, in denen ein erwarteter Reibwertsprung beim Verlassen des Banketts ausbleibt, weil beispielsweise das Bankett mit Betonrasengittersteinen befestigt ist, muss eine Anforderung des Zusatzgiermoments möglichst schnell beendet werden. Bei einer Ausführungsform wird das Giermoment instantan auf Null gesetzt. Bei anderen Ausführungsformen wird das Zusatzgiermoment gemeinsam mit einer Reduktion des Lenkradwinkels bis zur Geradeausstellung proportional reduziert, sodass es bei Geradeausstellung des Lenkradwinkels den Wert Null erreicht.

Befindet sich das Fahrzeug beim Beenden der Bankettfunktion in einer Kurvenfahrt, was anhand von ermittelten Querbeschleunigungen im Fahrzeug erfasst werden kann oder anhand von Navigationsdaten gemeinsam mit Daten einer Straßenkarte oder anderen digitalen Medien ermittelt werden kann, so erfolgt ein Abbau des Zusatzgiermoments vorzugsweise so, dass das Giermoment proportional auf den Wert Null für einen Lenkradwinkel reduziert wird, der benötigt wird um den gekrümmten Fahrstreifen mittig zu befahren.

Ein Fehlen eines Reibwertsprungs beim Übergang vom Bankett zur Fahrbahnfahrt kann daran festgestellt werden, dass kein Giermomentsprung beobachtet wird. Zusätzlich können auch Reibwertschätzungen einbezogen werden. Der Reibwert kann anhand eines Radschlupfs ermittelt werden, der sich bei konstantem Antriebsmoment ändert. Ebenfalls können Radgeschwindigkeiten und Differenzen einen Hinweis auf unterschiedliche Reibwerte liefern.

Die Anpassung des angeforderten Zusatzgiermoments erfolgt vorzugsweise angepasst an die Reibwertunterschiede zwischen den Rädern, welche auf der Fahrbahn fahren, und jenen, die im Bankett fahren. Je höher der Reibwertunterschied ist, desto größer ist das Quermoment, welches beim Rückführen der Fahrzeugräder vom Bankett auf die Fahrbahn auftritt, das somit das Übergangsgiermoment induziert. Somit ist die Anpassung des angeforderten Zusatzgiermoments bzw. der Solleingriffsvorgabe angepasst an die ermittelten und/oder geschätzten Reibwertunterschiede vorteilhaft. Je höher der Reibwertunterschied ist, desto höher ist ein Reibwertsprung und sind die Seitenkraftsprünge, die das Übergangsgiermoment bewirkten, welches zu einem Übersteuern und Schleudern des Fahrzeugs führt, wenn dieses nicht vorkompensiert wird.

Reibwertinformationen können auch anhand von Bildinformationen, die mit einer Kamera erfasst werden, abgeleitet werden oder aus Daten einer Straßenkarte oder anderen digitalen Medien entnommen werden, die die lokalen Reibwerte der Fahrbahn und des Banketts enthalten. Ebenfalls kann eine Anpassung an witterungsbedingte Umstände erfolgen. Beispielsweise sind größere Reibwertsprünge bei schnee- und eisbedeckter Fahrbahn bzw. teilweise geräumter Fahrbahnen oder geräumter Fahrbahn und Schnee und Eis auf dem Bankett zu erwarten.

Nach einem weiteren Aspekt wird ein Unterstützungssystem zum Unterstützen des sicheren Beendens einer Bankettfahrt eines Fahrzeugs geschaffen, wobei das Unterstützungssystem eine Steuereinrichtung mit mindestens einer Schnittstelle zum Empfangen mindestens eines Sensorsignals und Ausgeben mindestens eines Ausgabesignals, insbesondere einer Solleingriffsvorgabe zum Bewirken eines aktiven Eingriffs in mindestens ein das Fahrverhalten des Fahrzeugs beeinflussendes Fahrzeugsystem bewirkt, wobei die Steuereinrichtung ausgebildet ist, das oben beschriebene Verfahren auszuführen. In der Regel wird die Steuereinheit eine Recheneinheit und eine Speichereinheit umfassen, in der ein Computerprogramm abgelegt ist, welches Befehle umfasst, deren Ausführung auf der Recheneinheit das oben beschriebene Verfahren verwirklichen.

Gemäß einem weiteren Aspekt wird somit ein Computerprogramm mit Befehlen zum Ausführen auf einer Recheneinheit geschaffen, bei dessen Abarbeitung ein oben beschriebenes Verfahren ausgeführt wird.

Die Erfindung wird nachfolgend unter Bezugnahme auf eine Zeichnung näher erläutert. Hierbei zeigen:
- Fig. 1: eine schematische Darstellung eines Kraftfahrzeugs zu unterschiedlichen Zeitpunkten; und
- Fig. 2: eine schematische Darstellung zur Erläuterung der Anpassung der Solleingriffsvorgabe.

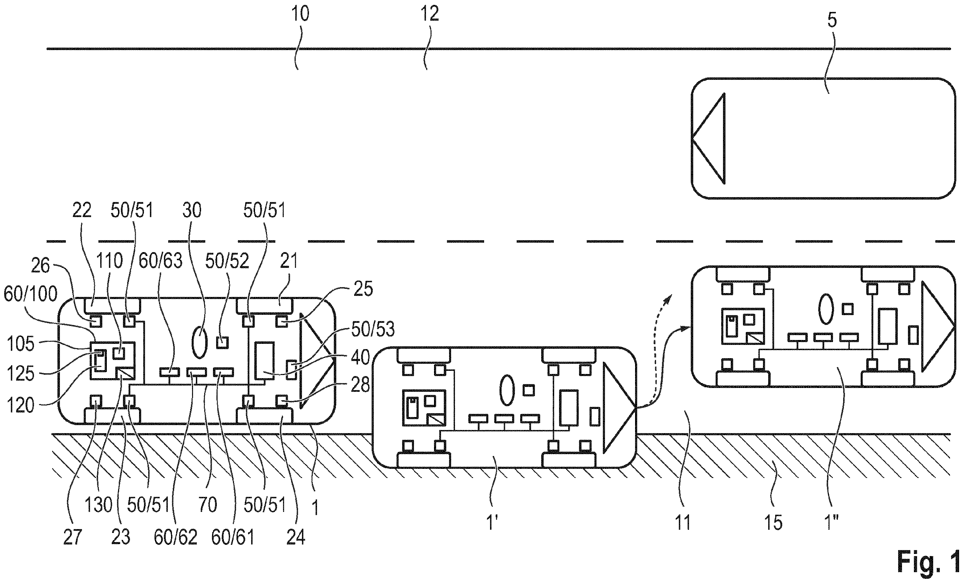

In Fig. 1 ist schematisch ein Kraftfahrzeug 1, 1', 1" zu unterschiedlichen Zeitpunkten bei der Fahrt auf einer Fahrbahn 10 mit einem Fahrstreifen 11 und einem weiteren Fahrstreifen 12 schematisch dargestellt. Neben dem einen Fahrstreifen 11 befindet sich ein Bankett 15.

Das Fahrzeug 1 umfasst vier Räder 21-24, denen jeweils Bremsen 25-28 zugeordnet sind. Mindestens zwei der Räder 21-24 sind über ein Lenkrad 30 von einer das Fahrzeug 1 führenden Person (nicht dargestellt) lenkbar. Darüber hinaus sind zumindest einige der Räder 21-24 mit einer Antriebseinheit 40 gekoppelt. Die Antriebseinheit 40 kann eine Verbrennungsmaschine und/oder ein oder mehrere elektrische Maschinen umfassen. Die Kopplung kann direkt oder über ein Getriebe (nicht dargestellt) erfolgen.

Das Fahrzeug 1 weist darüber hinaus eine Vielzahl von Sensoren 50 auf, welche beispielsweise Radsensoren 51, einen Lenkradwinkelsensor 52, eine Kamera 53 usw. umfassen können. Das Fahrzeug weist darüber hinaus Steuergeräte 60 auf, die beispielsweise ein Motorsteuergerät 61, eine Fahrdynamikregelung 62, die ein elektronisches Stabilitätsprogramm ausführt, ein Bremssteuergerät 63 usw. umfassen. Die Sensoren 50 sind in der Regel mit einem der Steuergeräte 60 unmittelbar oder über ein Bussystem 70 gekoppelt. Auch die Steuergeräte sind untereinander vorzugsweise über das Bussystem 70 miteinander oder direkt miteinander verbunden. Die hier gewählte Darstellung ist stark vereinfachend. Es versteht sich für den Fachmann, dass die Steuergeräte 60 und Sensoren 50 über unterschiedliche Bussysteme parallel und/oder hierarchisch miteinander verbinden sein können.

Das Fahrzeug umfasst als weiteres der Steuergeräte 60 ein Unterstützungssystem 100 zum sicheren Beenden einer Bankfahrt. Das Unterstützungssystem 100 umfasst eine Steuereinrichtung 105 die eine Recheneinheit 110, einen Speicher 120 und eine Schnittstelle 130 umfasst. Die Recheneinheit 110 ist beispielsweise als Mikroprozessor ausgebildet. Die Recheneinheit 110 kann auch in beliebiger anderer Hardware ausgeführt sein. Mit der Recheneinheit 110 ist der Speicher 120 verknüpft, in dem vorzugsweise ein Computerprogramm 125 abgelegt ist. Das Computerprogramm 125 umfasst Befehle, die bei einer Abarbeitung auf der Recheneinheit ein Verfahren zum Unterstützen eines sicheren Beendens einer Bankettfahrt ausführen. Das Unterstützungssystem 100 weist ferner die Schnittstelle 130 auf, über die das Unterstützungssystem 100 ein oder mehrere Sensorsignale erfassen kann und mindestens eine Solleingriffsvorgabe ausgeben kann, um eine eine Fahrdynamik beeinflussende Aktion eines Fahrzeugsystems zu bewirken.

Als Fahrzeugsystem wird hier eine funktionelle Einheit aufgefasst, die ein oder mehrere der Steuergeräte 60 und gegebenenfalls weitere Komponenten umfassen kann, die die Fahrdynamik beeinflussen. Die Bremsen 25- 28 zusammen mit dem Bremssteuergerät 63, gegebenenfalls erweitert um eine Fahrdynamikregelung 62, stellen ein beispielhaftes Fahrzeugsystem dar, welches die Fahrdynamik beeinflusst. Sofern eine Steer-by-Wire-Lenkung umgesetzt ist, kann ein Lenkungssteuergerät mit Aktoren der Lenkung beispielhaft ein Fahrzeugsystem darstellen.

Die Steuereinrichtung 105 kann auch in beliebiger anderer Hardware ausgeführt sein.

Das Fahrzeug 1 fährt zu einem ersten Zeitpunkt auf dem einen Fahrstreifen 11 in Fig. 1 von links nach rechts. Zu einem späteren Zeitpunkt fährt das Fahrzeug 1' mit zumindest zwei Rädern 23, 24 im Bankett 15 und mit den anderen Rädern 21, 22 auf der Fahrbahn 10. Bei den Darstellungen des Fahrzeugs 1', 1" zu späteren Zeitpunkten, sind aus Gründen der Übersichtlichkeit nur einige Komponenten mit Bezugszeichen versehen.

Da das Bankett 15 einen anderen Reibwert als die Fahrbahn 10 aufweist, treten hierdurch unterschiedliche Kräfte an den einzelnen Rädern 21-24 auf, die in das Fahrzeug ein Giermoment induzieren können. Bei der "normalen" Geradeausfahrt wird ein solches Giermoment in der Regel durch die Fahrdynamikregelung 62 ausgeglichen, wenn dieses auftritt. Eine das Fahrzeug führende Person versucht jedoch meist unmittelbar, sobald diese die Bankettfahrt bemerkt, das Fahrzeug zurück auf die Fahrbahn 10 zu lenken. In der Regel wird hierbei eine zu heftige Lenkreaktion ausgeführt, sodass die Gefahr besteht, dass das Fahrzeug auf die weitere Fahrbahn 12 gerät, auf der sich beispielsweise ein entgegenkommendes Fahrzeug 5 befinden kann, mit dem dann Kollisionsgefahr besteht. Zusätzlich zu der häufig zu heftigen Lenkreaktion tritt an den Rädern, die vom Bankett 15 auf die Fahrbahn 10 zurückgelangen, ein Reibwertsprung auf. Hiermit einher geht ein Sprung der an den Rädern wirkenden Kräfte, insbesondere der Querkräfte. Hierdurch wird ein weiteres Giermoment induziert, welches zu einem Übersteuern des Fahrzeug 1 führt. Dieses mit dem Reibwertsprung einhergehende zusätzliche Giermoment, das Übergangsgiermoment, kann von den im Stand der Technik bekannten Fahrdynamikregelungen oft nicht adäquat kompensiert werden. Diese Funktion übernimmt das Unterstützungssystem 100.

Aus dem Stand der Technik ist es bekannt, wie anhand von verschiedenen Sensorsignalen eine Bankettfahrt erkannt werden kann. Beispielsweise können hierzu Bildsignale der Kamera 53 oder Signale von den Radsensoren 51 in Kombination mit Informationen des Motorsteuergeräts 61 ausgewertet werden. Wird beispielsweise bei konstant gehaltenem Antriebsmoment an einzelnen Rädern 23, 24 eine Steigerung des Radschlupfes festgestellt, so kann dies beispielsweise auf eine Änderung des Reibwerts hindeuten, die mit einer Bankettfahrt verbunden ist. Für die hier beschriebene Erfindung ist es nicht wesentlich, wie die Bankettfahrt erkannt wird. Anhand eines Signals des Lenkwinkelsensors kann das Unterstützungssystem 100 ermitteln, dass die das Fahrzeug 1, 1' führende Person das teilweise im Bankett 15 fahrende Fahrzeug 1' zurück auf die Fahrbahn 10 lenken will. Sobald dies erkannt ist, d.h. eine Bankettfahrt und die Fahrerabsicht, die Bankettfahrt zu beenden, erkannt sind, wird von dem Unterstützungssystem 100 eine Solleingriffsvorgabe ausgegeben, die ein die Fahrdynamik beeinflussendes System, z.B. die Fahrdynamikregelung 62 mit hiervon gesteuerten Komponenten oder das Bremssystem, dazu veranlasst, insbesondere ein Giermoment zu erzeugen, welches vorsteuernd das Giermoment vorkompensiert, welches beim Übergang der Räder vom Bankett auf die Fahrbahn aufgrund des Reibwertsprungs erwartet wird. Beispielsweise kann hier ein vorgegebenes Zusatzgiermoment angefordert werden, welches einem typischerweise aufgrund eines Reibwertsprungs auftretenden Giermoment betragsmäßig entspricht und diesem entgegengerichtet ist.

Es hat sich jedoch gezeigt, dass eine konstante Anforderung eines vorsteuernden Giermoments nicht in allen Fällen zur optimalen Rückführung des Fahrzeugs auf die Fahrbahn 10 und deren Fahrstreifen 11 führen.

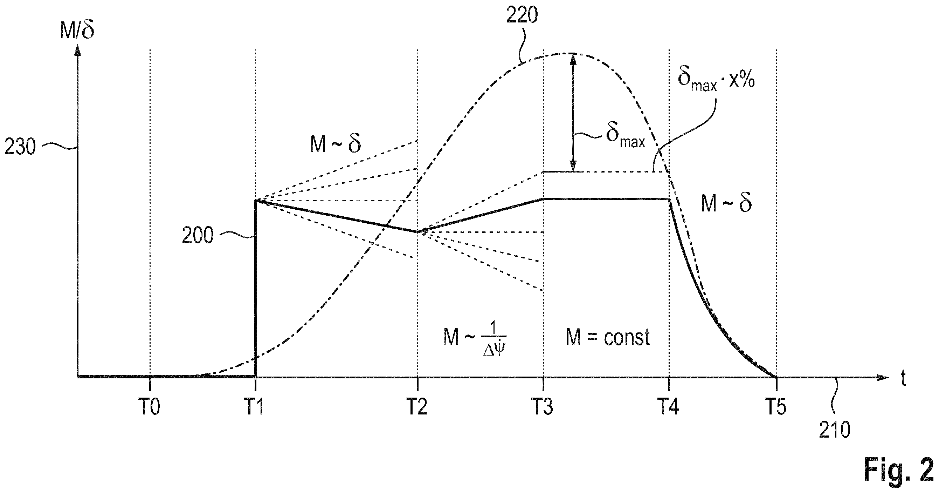

Die Funktion des Unterstützungssystems 100 zum Beenden der Bankettfahrt wird im Folgenden im Zusammenhang mit Fig. 2 näher erläutert. Die Funktionalität bewirkt, dass das Fahrzeug sicher zurück auf den einen Fahrstreifen 11 der Fahrbahn 10 geführt wird und eine Kollision beispielsweise mit dem entgegenkommenden Fahrzeug 5 vermieden werden kann. Das zu dem dritten Zeitpunkt dargestellte Fahrzeug 1" kann somit dem entgegenkommenden Fahrzeug 5 sicher begegnen.

In Fig. 2 sind eine Zusatzgiermomentanforderung 200 alt Solleingriffsvorgabe sowie ein Lenkradwinkel 220 aufgrund des Lenkverhaltens einer das Fahrzeug führenden Person gegenüber der Zeit 210 für eine Bankettfahrt und deren Beendung schematisch dargestellt. Auf der Ordinate 240 sind das Giermoment M für die Zusatzgiermomentanforderung 200 bzw. der Drehwinkel δ für den Lenkradwinkel 220 aufgetragen. Die Abszisse 230 gibt die Zeit 210 an. Das gewählte oder angepasste Zusatzgiermoment der Zusatzgiemomentanforderung 200 ist mit einer durchgezogenen Linie dargestellt. Mögliche Variationen sind gestrichelt angedeutet.

Zu einem Zeitpunkt T0 wird eine Bankettfahrt detektiert. Zum Zeitpunkt T1 wird eine Lenkreaktion erkannt, die eine Rückführungsabsicht des Fahrzeugs auf die Fahrbahn erkennen lässt. Das Unterstützungssystem 100 fordert hierauf ein Zusatzgiermoment mittels der Ausgabe einer entsprechenden Solleingriffsvorgabe an. Bei anderen Ausführungsformen könnte die Solleingriffsvorgabe auch als Zusatzlenkwinkel oder unmittelbar als radselektive Bremsanforderung ausgegeben werden. Es hat sich jedoch als vorteilhaft herausgestellt, als Solleingriffsvorgabe ein Zusatzgiermoment anzugeben, welches das beim Übergang der Räder vom Bankett auf die Fahrbahn auftretende oder erwartete Giermoment vorsteuernd kompensiert. Die Solleingriffsvorgabe wird vorzugsweise an eine Fahrdynamikregelung ausgegeben, die selbstständig die entsprechenden Aktoren im Fahrzeug, beispielsweise die Bremsen oder eine Lenkung ansteuert.

Zu diesem Zeitpunkt ist noch nicht endgültig abschätzbar, wie groß das auftretende Giermoment beim Übergang der Räder vom Bankett auf die Fahrbahn tatsächlich sein wird. Dieses hängt von unterschiedlichen Faktoren ab. Aufgabe des Unterstützungssystems ist es, diese unterschiedlichen Faktoren möglichst gut zu berücksichtigen, um eine möglichst gute Vorkompensation dieses für die das Fahrzeug führende Person unerwarteten Giermomentsprungs zu erreichen und die Person, die ohnehin aufgrund des unbeabsichtigten Verlassens der Fahrbahn in einer Stresssituation ist, möglichst wenig zu irritieren.

In die ursprüngliche Festlegung der Solleingriffsvorgabe, beispielsweise des angeforderten Zusatzgiermoments, können beispielsweise eine aktuell festgestellte Querbeschleunigung, bereits ermittelte Reibwertunterschiede sowie eine Fahrzeuggeschwindigkeit eingehen. Weitere Größen können berücksichtigt werden. Grundsätzlich gilt beispielsweise, dass das auftretende Übergangsgiermoment mit der Zunahme der Fahrzeuggeschwindigkeit zunimmt. Dies bedeutet, dass die aktuelle Fahrzeuggeschwindigkeit einen Einfluss auf das zur Kompensation benötigte zusätzliche Giermoment hat. Die Querbeschleunigung ist für Situationen wichtig, in denen das Fahrzeug sich beispielsweise in einer Kurvenfahrt befindet und die Bankettfahrt aufgetreten ist, weil sich das Fahrzeug bereits im Grenzbereich der fahrdynamischen Stabilität befindet. Ist die Querbeschleunigung somit größer als ein Querbeschleunigungsschwellenwert, so wird die Solleingriffsvorgabe vorzugsweise auf Null gesetzt und kein vorsteuerndes kompensierendes Giermoment angefordert, da dieses unter Umständen die Fahrstabilität des Fahrzeugs gefährden würde. Der Querbeschleunigungsschwellenwert ist vorzugsweise geringer gewählt als ein entsprechender Eingriffsschwellenwert der Querbeschleunigung für ein Eingreifen einer Fahrdynamikregelung.

Wird dem Unterstützungssystem eine Kollisionswarnung übermittelt, so wird bei einer bevorzugten Ausführungsform ebenfalls die Solleingriffsvorgabe auf Null gesetzt, also kein Zusatzgiermoment angefordert, um die Lenkreaktionen der das Fahrzeug führenden Person in einer solchen Situation nicht nachteilig zu bedämpfen.

Sind die Reibwertunterschiede zwischen dem Bankett und der Fahrbahn bekannt, so können diese bei der Festlegung der Solleingriffsvorgabe, beispielsweise des angeforderten Zusatzgiermoments, mit einbezogen werden. Je größer der Reibwertunterschied ist, desto größer wird die Solleingriffsvorgabe zum Bedämpfen der Lenkreaktion der das Fahrzeug führenden Person gewählt.

Mit dem Anfordern des zusätzlichen Giermoments wird bei bevorzugten Ausführungsformen ebenfalls eine Reduzierung eines Antriebsmoments und/oder eine Begrenzung des Antriebsmoments ausgelöst. In vorteilhafter Weise kann die das Fahrzeug führende Person selbst bei einer Betätigung des Fahrpedals das Fahrzeug während der andauernden Bankettfahrt bis zu einer sicheren Rückführung auf die Fahrbahn nicht beschleunigen. Diese Anforderung wird bei einigen Ausführungsformen direkt über ein Motorsteuergerät vorgenommen. Bei anderen Ausführungsformen wird diese Anforderung über die Fahrdynamikregelung angefordert.

Um die Fahrzeuggeschwindigkeit zu reduzieren, was auch zu einer Reduktion des beim Übergang der Räder vom Bankett auf die Fahrbahn auftretenden Giermoments reduziert, wird vorzugsweise über die Solleingriffsvorgabe darüber hinaus ein Bremsen aller Räder bzw. eine Reduktion der Fahrzeuggeschwindigkeit angefordert. In der Regel wird diese Anforderung ebenfalls über die Fahrdynamikregelung ausgelöst bzw. angefordert. Sie kann jedoch auch unmittelbar an ein Bremsensteuergerät übermittelt und ausgegeben werden. Das Bremsen wird dann von der Fahrdynamikregelung so ausgeführt, dass alle Räder vorzugsweise entsprechend der jeweiligen Reibwerte an den Rädern radselektiv gebremst werden, ohne hierdurch ein Giermoment in das Fahrzeug zu induzieren.

Die Anforderung des zusätzlichen Giermoments als Solleingriffsvorgabe wird vorzugsweise zeitlich vor dem Beenden der Bankettfahrt, also dem Übergang der Räder vom Bankett auf die Fahrbahn an die aktuellen Bedingungen angepasst. Von entscheidender Bedeutung ist hierbei zunächst die Lenkradwinkelgeschwindigkeit, welche eine Information über die Heftigkeit der Lenkreaktion der das Fahrzeug führenden Person ausdrückt. Diese eilt dem eigentlichen Lenkradwinkel zeitlich voraus. Findet eine Lenkbewegung mit einer hohen Lenkradwinkelgeschwindigkeit statt, so ist von einer Anforderung eines hohen Lenkwinkels auszugehen, sodass zusätzlich zu der Kompensation des beim Übergang der Räder vom Bankett zur Fahrbahn auftretenden Übergangsgiermoment auch die überschießende Lenkreaktion zu kompensieren ist. Daher wird die Solleingriffsvorgabe zum Bedämpfen der Lenkreaktion gesteigert, beispielsweise das zur Kompensation angeforderte Zusatzgiermoment erhöht. In Fig. 2 sind daher unterschiedliche mögliche angeforderte Zusatzgiermomente, die proportional zur Lenkradwinkelgeschwindigkeit gewählt sind, gestrichelt dargestellt. Mit der durchgezogenen Linie ist das tatsächliche in der beschriebenen Situation gewählte Zusatzgiermoment dargestellt.

Noch vor dem Übergang vom Bankett auf die Fahrbahn wird bei einer bevorzugten Ausführungsform zusätzlich oder alternativ eine Istgierrate, die anhand von Fahrzeugsensoren gemessen wird und als Sensorsignal von dem Unterstützungssystem erfasst wird, mit der Sollgierrate verglichen, die durch die Lenkwinkelanforderung der das Fahrzeug führenden Person festgelegt ist. Da das Übergangsgiermoment eine übersteuernde Funktion aufweist, ist ein untersteuerndes Verhalten vor dem Übergang der Räder vom Bankett auf die Fahrbahn wünschenswert. Ist also das Ist-Giermoment geringer als das Soll-Giermoment, so ist dies grundsätzlich positiv. Ist die Abweichung jedoch zu groß, so kann hieraus geschlossen werden, dass das angeforderte Zusatzgiermoment einen zu großen Wert aufweist. Somit wird die Solleingriffsvorgabe bzw. das angeforderte Zusatzgiermoment reduziert, wenn die Differenz einen ersten Giermomentschwellenwert überschreitet. Wird hingegen von der Differenz ein zweiter Giermomentschwellenwert unterschritten, so erfolgt die Fahrzeuglenkwinkelanforderung zu gut und es ist eine höhere Bedämpfung vorteilhaft, sodass die Solleingriffsvorgabe gesteigert, beispielsweise das Zusatzgiermoment erhöht wird. Dieses erfolgt zwischen den Zeitpunkten T2 und T3. Unabhängig von dem tatsächlich erreichten Lenkradwinkel wird die Giermomentanforderung nur zur Kompensation einer Sollgierrate vorgenommen, die einem vorgegebenen Prozentsatz x% des maximal möglichen Lenkwinkels δₘₐₓ bzw. einer maximal möglichen Sollgierrate entspricht.

Zum Zeitpunkt T3 beginnt die Übergangsphase, bei der die Räder vom Bankett auf die Fahrbahn gelangen. Zu diesem Zeitpunkt wird die Solleingriffsvorgabe, beispielsweise das angeforderte Zusatzgiermoment, konstant gehalten, um einen Fahrer möglichst wenig zu irritieren.

Zu einem Zeitpunkt T4, zu dem festgestellt wird, dass sich das Fahrzeug wieder mit allen Rädern auf der Fahrbahn befindet, ist es notwendig, die Solleingriffsanforderung, beispielsweise das Zusatzgiermoment, auf Null zurückzuführen. Dieser Zustand kann anhand unterschiedlicher Sensoren, beispielsweise des Kamerasensors 53 und/oder der Radsensoren 51 usw. ermittelt werden oder beispielsweise anhand des auftretenden mit dem Reibwertunterschied in Zusammenhang stehenden Giermomentsprungs. Die Rückführung des Zusatzgiermoments bzw. der Solleingriffsanforderung erfolgt vorzugsweise proportional mit dem Abbau des Lenkwinkels, den die das Fahrzeug führende Person vornimmt, da sie der Fahrzeugbewegung, die nun von dem einen Fahrstreifen in Richtung auf den zweiten Fahrstreifen gerichtet ist, entgegenlenkt. Die Rückführung wird so ausgeführt, dass das Zusatzgiermoment, d.h. die Solleingriffsvorgabe, auf Null zurückgeführt ist, wenn die Lenkradwinkelstellung mit einer Geradeausfahrt übereinstimmt. Auch wenn die das Fahrzeug führende Person das Lenkrad über die Geradeausstellung (δ=0) hinausbewegt, findet keine entsprechende Anforderung einer Solleingriffsvorgabe, beispielsweise eines Zusatzgiermoments, statt. Die Unterstützungsfunktion ist hiermit beendet.

Auch in Situationen, in denen ein erwarteter Reibwertsprung ausbleibt, weil beispielsweise das Bankett mit Rasenkantensteinen aus Beton befestigt ist oder Ähnliches, ist es notwendig, sobald dieses erkannt ist, die Solleingriffsvorgabe, beispielsweise das angeforderte Zusatzgiermoment, möglichst zügig auf Null zurückzuführen. Dieses kann abrupt erfolgen, wird jedoch vorzugsweise linear und stetig über einen Zeitraum ausgeführt, um die das Fahrzeug führende Person möglichst wenig zu irritieren.

Bei der dargestellten Ausführungsform nach Fig. 1 ist der Straßenverlauf der Fahrbahn 10 gerade. Weist die Fahrbahn eine Krümmung auf, so kann die Rückführung des Zusatzgiermoments am Ende des Verfahrens zum Unterstützen des sicheren Beendens einer Bankettfahrt auch auf Null für einen Lenkradwinkel zurückgeführt werden, der angepasst an die Krümmung der Fahrbahn ist, d.h. notwendig ist, um auf dem Fahrstreifen mittig der gekrümmten Fahrbahn mit dem Fahrzeug zu folgen.

Es versteht sich, dass beispielhafte Ausführungsformen beschrieben sind. Die verschiedenen Merkmale können in abweichender Kombination verwendet werden, um die Erfindung im Rahmen der angehängten Ansprüche umzusetzen.

### Bezugszeichenliste

- 1, 1', 1": Fahrzeug
- 5: entgegenkommendes Fahrzeug
- 10: Fahrbahn
- 11: ein Fahrstreifen
- 12: weitere Fahrstreifen
- 15: Bankett
- 21 - 24: Räder
- 25 - 28: Bremsen
- 30: Lenkrad
- 40: Antriebeinheit
- 50: Sensoren
- 51: Radsensoren
- 52: Lenkradwinkelsensor
- 53: Kamera
- 60: Steuergeräte
- 61: Motorsteuergerät
- 62: Fahrdynamikregelung /Elektronisches Stabilitätsprogramm
- 63: Bremsensteuergerät
- 70: Bussystem
- 100: Unterstützungssystem
- 105: Steuereinrichtung
- 110: Recheneinheit
- 120: Speicher
- 125: Computerprogramm
- 130: Schnittstelle
- 200: Zusatzgiermomentanforderung (Solleingriffsanforderung)
- 210: Zeit
- 220: Lenkradwinkel
- 230: Ordinate
- 240: Abszisse
- δmax: Maximal möglicher Lenkwinkel

## Patentansprüche

1. Verfahren zum sicheren Beenden einer Bankettfahrt eines Fahrzeugs (1, 1' ,1") umfassend folgende Schritte:
Ermitteln und Ausgeben einer Solleingriffsvorgabe (200) bei einer erfassten Fahrerabsicht, die Bankettfahrt zu beenden, wobei die ausgegebene Solleingriffsvorgabe (200) einen aktiven Eingriff in mindestens ein ein Fahrverhalten beeinflussendes Fahrzeugsystem bewirkt, wobei
zeitlich vor dem Erfassen eines Beendens der Bankettfahrt mindestens ein Sensorsignal ausgewertet wird,
**dadurch gekennzeichnet, dass**
anhand des mindestens einen Sensorsignals geprüft wird, ob die Solleingriffsvorgabe (200) noch angemessen ist, und die Solleingriffsvorgabe (200) angepasst wird, falls diese aufgrund der Auswertung des mindestens einen Sensorsignals nicht mehr angemessen erkannt ist.

2. Verfahren nach Anspruch 1, **dadurch gekennzeichnet, dass** die Solleingriffsvorgabe (200) ein Zusatzgiermoment angibt.

3. Verfahren nach Anspruch 2, **dadurch gekennzeichnet, dass** als eines des mindestens einen Sensorsignal eine Istgierrate erfasst wird und zusätzlich eine Sollgierrate aufgrund der Lenkreaktion eines Fahrers ermittelt oder erfasst wird und eine Differenz der Istgierrate und der Sollgierrate bestimmt wird, und die Solleingriffsvorgabe angepasst wird, wenn ein Betrag der Differenz einen ersten Gierratenschwellenwert überschreitet oder einen zweiten Gierratenschwellenwert unterschreitet, wobei der erste Gierratenschwellenwert größer als der zweite Gierratenschwellenwert ist.

4. Verfahren nach Anspruch 2 oder 3, **dadurch gekennzeichnet, dass** zumindest eines des mindestens einen Sensorsignals iterativ erfasst wird, und eine Anpassung der Solleingriffsvorgabe (200) aufgrund einer Änderung des zumindest einen iterativ erfassten des mindestens einen Sensorsignals erfolgt.

5. Verfahren nach Anspruch 4, dass als eines des mindestens einen Sensorsignals eine Fahrzeuggeschwindigkeit iterativ erfasst wird und eine Änderung der Fahrzeuggeschwindigkeit ausgewertet wird, und beim Feststellen einer Zunahme der Fahrzeuggeschwindigkeit, das zum Bankett (15) weisende Zusatzgiermoment erhöht und das zur Fahrbahn (10) weisende Zusatzgiermoment erniedrigt wird und beim Feststellen einer Abnahme der Fahrzeuggeschwindigkeit, das zum Bankett (15) weisende Zusatzgiermoment erniedrigt und das zur Fahrbahn (10) weisende Zusatzgiermoment erhöht wird.

6. Verfahren nach einem der vorangehenden Ansprüche 4 oder 5, **dadurch gekennzeichnet, dass** die Lenkradwinkelgeschwindigkeit als eines des mindestens einen Sensorsignals iterativ erfasst wird, und eine Änderung der Lenkradwinkelgeschwindigkeit ausgewertet wird, und beim Feststellen einer Zunahme der Lenkradwinkelgeschwindigkeit, das zum Bankett weisende Zusatzgiermoment erhöht und das zur Fahrbahn weisende Zusatzgiermoment erniedrigt wird und beim Feststellen einer Abnahme der Lenkradwinkelgeschwindigkeit das zum Bankett weisende Zusatzgiermoment erniedrigt und das zur Fahrbahn weisende Zusatzgiermoment erhöht wird.

7. Verfahren nach einem der vorangehenden Ansprüche 4 oder 5, **dadurch gekennzeichnet, dass** als eines des mindestens einen Sensorsignals eine Querbeschleunigung erfasst wird und die Querbeschleunigung mit einem Querbeschleunigungsschwellenwert verglichen wird, welcher geringer als eine Eingriffsschwelle eines Stabilisierungsassistenten für eine normale Fahrt auf einer Fahrbahn ist, und bei Überschreiten des Querbeschleunigungsschwellenwert die Solleingriffsvorgabe auf Null zurückgeführt wird.

8. Verfahren nach einem der vorangehenden Ansprüche 2 bis 7, **dadurch gekennzeichnet, dass** nach dem Erfassen eines Endes der Bankettfahrt oder einem Ausbleiben eines erwarteten Reibwertsprungs beim Verlassen des Banketts (15), die Solleingriffsvorgabe (200) proportional zur Reduktion des Lenkradwinkels (δ) vorgenommen wird.

9. Verfahren nach einem der vorangehenden Ansprüche, **dadurch gekennzeichnet, dass** ein Antriebsmoment während der Bankettfahrt begrenzt oder reduziert wird, sofern nicht ein Kollisionssignal eine erkannte Kollisionsgefahr anzeigt.

10. Unterstützungssystem (100) zum Unterstützen eines sicheren Beendens einer Bankettfahrt eines Fahrzeugs (1, 1', 1") umfassend:
eine Steuereinrichtung (105) mit mindestens einer Schnittstelle (130) zum Empfangen mindestens eines Sensorsignals und Ausgeben mindestens einer Solleingriffsvorgabe zum Bewirken eines aktiven Eingriffs in mindestens ein ein Fahrverhalten des Fahrzeugs (1, 1', 1") beeinflussendes Fahrzeugsystem, wobei die Steuereinrichtung (105) ausgebildet ist, das Verfahren nach einem der Ansprüche 1 bis 9 auszuführen.

11. Computerprogramm (125) umfassend Befehle, die bei einer Ausführung auf einer Recheneinheit (110) einer Steuereinrichtung eines Fahrzeugs bewirken, dass ein Verfahren nach einem der Ansprüche 1 bis 9 ausgeführt wird.

## Claims

1. Method for safely ending the driving of a vehicle (1, 1', 1") on a verge, comprising the following steps:
determining and outputting a target intervention specification (200) when there is a detected intention of the driver to end driving on a verge,
wherein the output target intervention specification (200) brings about an active intervention in at least one vehicle system with an influence on handling characteristics, wherein
at a time before ending of the driving on a verge is detected, at least one sensor signal is evaluated,
**characterized in that**
it is checked on the basis of the at least one sensor signal whether the target intervention specification (200) is still appropriate, and the target intervention specification (200) is adapted if it is recognized as being no longer appropriate on the basis of the evaluation of the at least one sensor signal.

2. Method according to Claim 1, **characterized in that** the target intervention specification (200) specifies an additional yawing moment.

3. Method according to Claim 2, **characterized in that** an actual yawing rate is detected as one of the at least one sensor signals and in addition a target yawing rate is determined or detected on the basis of the steering reaction of a driver and a difference between the actual yawing rate and the target yawing rate is determined, and the target intervention specification is adapted if an amount of the difference is above a first yawing rate threshold value or is below a second yawing rate threshold value, wherein the first yawing rate threshold value is greater than the second yawing rate threshold value.

4. Method according to Claim 2 or 3, **characterized in that** at least one of the at least one sensor signals is iteratively detected, and an adaptation of the target intervention specification (200) takes place on the basis of a change in the at least one iteratively detected sensor signal of the at least one sensor signals.

5. Method according to Claim 4, in that the vehicle speed is iteratively detected as one of the at least one sensor signals and a change in the vehicle speed is evaluated, and, if an increase in the vehicle speed is found, the additional yawing moment towards the verge (15) is increased and the additional yawing moment towards the carriageway (10) is decreased and, if a decrease in the vehicle speed is found, the additional yawing moment towards the verge (15) is decreased and the additional yawing moment towards the carriageway (10) is increased.

6. Method according to one of the preceding Claims 4 or 5, **characterized in that** the steering wheel angular velocity is iteratively detected as one of the at least one sensor signals, and a change in the steering wheel angular velocity is evaluated, and, if an increase in the steering wheel angular velocity is found, the additional yawing moment towards the verge is increased and the additional yawing moment towards the carriageway is decreased and, if a decrease in the steering wheel angular velocity is found, the additional yawing moment towards the verge is decreased and the additional yawing moment towards the carriageway is increased.

7. Method according to one of the preceding Claims 4 or 5, **characterized in that** a transversal acceleration is detected as one of the at least one sensor signals and the transversal acceleration is compared with a transversal acceleration threshold value, which is lower than an involvement threshold of a stabilizing assistant for normal driving on a carriageway, and, if the transversal acceleration threshold value is exceeded, the target intervention specification is returned to zero.

8. Method according to one of the preceding Claims 2 to 7, **characterized in that**, after an end of driving on a verge or the absence of unexpected jump in the friction coefficient on leaving the verge (15) is detected, the target intervention specification (200) is performed proportionally to the reduction in the steering wheel angle (δ).

9. Method according to one of the preceding claims, **characterized in that** the drive torque is limited or reduced while driving on the verge unless a collision signal indicates a recognized risk of collision.

10. Assistance system (100) for assisting safe ending of the driving of a vehicle (1, 1', 1") on a verge, comprising:
a control device (105) with at least one interface (130) for receiving at least one sensor signal and outputting at least one target intervention specification for bringing about an active intervention in at least one vehicle system with an influence on handling characteristics of the vehicle (1, 1', 1"), wherein the control device (105) is designed to carry out the method according to one of Claims 1 to 9.

11. Computer program (125) comprising commands which, when executed on a computing unit (110) of a control device of a vehicle, bring about the effect that a method according to one of Claims 1 to 9 is carried out.

## Revendications

1. Procédé permettant d'achever de façon sécurisée la conduite sur accotement d'un véhicule (1, 1', 1"), comprenant les étapes suivantes consistant à :
établir et sortir une spécification d'intervention de consigne (200) si l'intention du conducteur d'achever la conduite sur accotement est détectée, dans lequel la spécification d'intervention de consigne (200) sortie provoque une intervention active dans au moins un système de véhicule influençant un comportement de conduite, dans lequel au moins un signal de capteur est évalué avant que l'achèvement de la conduite sur accotement ne soit détecté,
**caractérisé en ce qu'**il est vérifié à l'aide dudit au moins un signal de capteur si la spécification d'intervention de consigne (200) est toujours appropriée, et la spécification d'intervention de consigne (200) est adaptée si elle est identifiée comme n'étant plus appropriée en raison de l'évaluation dudit au moins un signal de capteur.

2. Procédé selon la revendication 1, **caractérisé en ce que** la spécification d'intervention de consigne (200) indique un couple d'embardée supplémentaire.

3. Procédé selon la revendication 2, **caractérisé en ce qu'**un taux d'embardée réel est détecté comme l'un dudit au moins un signal de capteur, et en plus un taux d'embardée de consigne est établi ou détecté en raison de la réaction de braquage d'un conducteur, et une différence entre le taux d'embardée réel et le taux d'embardée de consigne est déterminée, et la spécification d'intervention de consigne est adaptée lorsqu'un montant de la différence dépasse une première valeur seuil de taux d'embardée ou soupasse une deuxième valeur seuil de taux d'embardée, la première valeur seuil de taux d'embardée étant supérieure à la deuxième valeur seuil de taux d'embardée.

4. Procédé selon la revendication 2 ou 3, **caractérisé en ce qu'**au moins l'un dudit au moins un signal de capteur est détecté de manière itérative, et une adaptation de la spécification d'intervention de consigne (200) est effectuée en raison d'un changement dudit au moins un signal de capteur détecté de manière itérative dudit au moins un signal de capteur.

5. Procédé selon la revendication 4, en ce qu'une vitesse de véhicule est détectée de manière itérative comme l'un dudit au moins un signal de capteur et un changement de la vitesse de véhicule est évalué, et lorsqu'une augmentation de la vitesse de véhicule est constatée, le couple d'embardée supplémentaire orienté vers l'accotement (15) est augmenté et le couple d'embardée supplémentaire orienté vers la chaussée (10) est diminué, et lorsqu'une diminution de la vitesse de véhicule est constatée, le couple d'embardée supplémentaire orienté vers l'accotement (15) est diminué et le couple d'embardée supplémentaire orienté vers la chaussée (10) est augmenté.

6. Procédé selon l'une quelconque des revendications précédentes 4 ou 5, **caractérisé en ce que** la vitesse angulaire du volant est détectée de manière itérative comme l'un dudit au moins un signal de capteur, et un changement de la vitesse angulaire du volant est évalué, et lorsqu'une augmentation de la vitesse angulaire du volant est constatée, le couple d'embardée supplémentaire orienté vers l'accotement est augmenté et le couple d'embardée supplémentaire orienté vers la chaussée est diminué, et lorsqu'une diminution de la vitesse angulaire du volant est constatée, le couple d'embardée supplémentaire orienté vers l'accotement est diminué et le couple d'embardée supplémentaire orienté vers la chaussée est augmenté.

7. Procédé selon l'une quelconque des revendications précédentes 4 ou 5, **caractérisé en ce qu'**une accélération transversale est détectée comme l'un dudit au moins un signal de capteur, et l'accélération transversale est comparée avec une valeur seuil d'accélération transversale qui est inférieure à un seuil d'intervention d'un assistant de stabilisation pour une conduite normale sur une chaussée, et en cas de dépassement de la valeur seuil d'accélération transversale la spécification d'intervention de consigne est ramenée à zéro.

8. Procédé selon l'une quelconque des revendications précédentes 2 à 7, **caractérisé en ce qu'**après la détection de la fin de la conduite sur accotement ou une absence d'un saut de coefficient de frottement attendu au moment de quitter l'accotement (15), la spécification d'intervention de consigne (200) est effectuée proportionnellement à la réduction de l'angle de volant (δ).

9. Procédé selon l'une quelconque des revendications précédentes, **caractérisé en ce qu'**un couple d'entraînement pendant la conduite sur accotement est limité ou réduit à moins qu'un signal de collision n'indique un risque de collision identifié.

10. Système d'assistance (100) permettant d'assister l'achèvement sécurisé de la conduite sur accotement d'un véhicule (1, 1', 1") comprenant :
un dispositif de commande (105) comprenant au moins une interface (130) pour recevoir au moins un signal de capteur et pour sortir au moins une spécification d'intervention de consigne afin de provoquer une intervention active dans au moins un système de véhicule influençant un comportement de conduite du véhicule (1, 1', 1"), dans lequel le dispositif de commande (105) est réalisé pour exécuter le procédé selon l'une quelconque des revendications 1 à 9.

11. Programme informatique (125), comprenant des instructions qui, lorsqu'elles sont exécutées sur une unité de calcul (110) d'un dispositif de commande d'un véhicule, font qu'un procédé selon l'une quelconque des revendications 1 à 9 est exécuté.
